# EUROPEAN PATENT SPECIFICATION

(11) **EP 1 242 224 B1**
(45) Date of publication and mention of the grant of the patent: **09.06.2004**
(21) Application number: 00984726.0
(22) Date of filing: 22.12.2000
(51) Int. Cl.: B29C 44/12, B29C 44/48, B29C 44/32, B29C 70/66

(54) **EXPANDED EXTRUDED POLYMERIC TEXTILE**
EXPANDIERTES EXTRUDIERTES KUNSTSTOFFTEXTIL
TEXTILE POLYMERE EXPANSE ET EXTRUDE

(30) Priority: 24.12.1999 CA 2293147; 14.01.2000 US 482953
(43) Date of publication of application: 25.09.2002
(73) Proprietor: Morbern Inc., Cornwall, Ontario K6H 5V3 (CA)
(72) Inventor: DILIPKUMAR, Desai, R., Cornwall, Ontario K6H 7C7 (CA)
(74) Representative: Newell, William Joseph
(86) International application number: PCT/CA2000/001511
(87) International publication number: WO 2001/047680

(56) References cited:
- EP-A- 0 190 788
- EP-A- 0 858 877
- EP-A- 0 873 865
- EP-A- 1 010 793
- DE-A- 3 145 341
- US-A- 4 808 450

## Description

### FIELD OF THE INVENTION

This invention relates to the field of textiles. In particular, it relates to textiles wherein a polymeric "plastic" layer is bonded to a fabric substrate, and the plastic layer is in the form of a foamed matrix.

### BACKGROUND TO THE INVENTION

In the production of plastic coated textiles, the product has customarily been made by one of the following alternate procedures:
1) casting a plastic layer in paste form onto a fabric carrier;
2) bonding a pre-formed plastic layer onto a fabric carrier by calendering and/or use of adhesives; and
3) extruding a molten plastic layer onto a fabric carrier.

When it has been intended to provide a plastic layer that is "foamed" and resilient due to included gas-filled cells or voids, it has been customary to create the expanded plastic matrix in two stages. First a plastic layer containing a blowing agent in a quiescent state is cast onto a fabric carrier. Then the formed composite textile is exposed to heat which causes gas to evolve within the plastic layer - the process of "blowing".

A disadvantage of this latter process is that the level of heat that is required to activate the blowing agent will cause carrier components in many types of fabric carriers to fuse, e.g. polyethylene will fuse at 80°C, whereas various types of chemical blowing agents require a temperature in excess of 150°C to create foaming conditions.

Attempts have been made to incorporate a blowing agent into an extruded plastic to form a foamed plastic layer and then to press the freshly extruded foam into a fabric. However, with the use of conventional chemical blowing agents, this process has produced a textile wherein, due to the foamed polymeric layer's lack of resistance to crushing, a flattened polymeric layer is formed that has almost no or little foam voids left in the structure after being pressed into the fabric. In a standard extrusion procedure for a non-foamed polymer, a chilled embossing roll presses the extruded sheet of melt into a fabric carrier supported by a second, optionally heated, rubber-coated roller where the plastic layer sets, and bonds, with the textile. Extrusion coated textiles prepared with classic blowing agents have typically lacked the resilience to recover sufficiently from this compression step to provide a satisfactorily foamed textile.

EP-A-0 858 877 discloses a method of producing a plastic foam reinforced by at least one fibrous web, in which is supplied to a stream of a foamable mixture from an applicator (page 4 lines 31-33) on the surface of a fibrous web, whereby the mixture penetrates said web.

A need exists for a foamed plastic composite textile that is formed on a permeable carrier, e.g. a woven, knitted or non-woven fabric, with a low fusing temperature, while exhibiting good recovery or resilience in response to applied pressure. This invention addresses this need as well as providing other advantages.

The invention in its general form will first be described, and then its implementation in terms of specific embodiments will be detailed with reference to the drawings following hereafter. These embodiments are intended to demonstrate the principle of the invention, and the manner of its implementation.

### SUMMARY OF THE INVENTION

According to one aspect of the invention, a method of producing a foamed sheet textile comprises:
1) extruding a polymeric melt from a linear extrusion die in the form of a sheet or film with two faces, the melt containing two or more classes of expanding agents comprising:
   (a) a first extrusion activated gas source dispersed within said melt; and
   (b) thermally expandable micro-spheres having encapsulating shells each containing compressed gas and being dispersed within said melt
2) allowing the expanding agents to expand, with the gas source generating gases to form a compressible foamed matrix in the melt and allowing the micro-spheres to expand into compression resistant expanded micro-spheres suspended within said foamed matrix;
3) depositing the melt onto a permeable carrier and into the surface of which the foamed melt partially penetrates; and
4) allowing the foamed polymeric composition so formed to set to provide a resilient compression-resistant, foamed plastic layer that is bonded to the carrier to form the resulting textile.

Suitable carriers include woven, knitted, non-woven compressed and other fiber-based continuous sheet materials as well as permeable polymeric foams and paper.

Preferably, the extrusion melt, upon being laid-down on the permeable carrier, is carried on the carrier through a rotating gate defined by a gap between two rollers, one of the rollers being cooled to set the melt. This establishes a constant height for the foamed layer on the textile. The roller delivering the carrier may be powered, and the second cooled roller may be traction-driven off of the powered roller by end-rims extending from the first, carrier roller.

The resulting product of the invention is a textile (including a paper-based product) having a permeable carrier into the surface of which the foamed plastic layer has expanded while still molten and while the gas generants are still expanding. Thus, the boundary surface of the carrier is at least partially embedded within the foamed plastic layer. Expansion of the foamed layer both above and within the carrier may continue after the formed textile exits the rotating gate, and particularly while the foamed layer is contained between the carrier and one of the two rollers.

By inclusion of thermally expandable micro-spheres in the melt the foamed plastic layer contains inclusions of thermally expanded hollow micro-spheres having encapsulating shells that, after expansion, are compression resistant. This allows the melt to be pressed into the carrier while substantially preserving the expanded state of the melt. The presence of micropheres further serves to enhance the resistance to crushing of the final foamed layer of the textile. The dispersed gas source gives the foamed layer a soft and resilient character which is highly desirable in a coated textile.

An advantage of this process is that polymers such as rubbers (both synthetic and natural), elastomers such as Engage-TM by Dow Chemicals, polymeric vinyl compounds, polypropylene, thermoplastic polyurethanes, styrenes, polyethylene and other conventional polymers may be used to provide the foamed plastic layer, along with blends of such components (hereafter referred to as "suitable polymers").

Further, a textile may be produced with an integrally-formed skin region present at its polymer surface, the skin region containing less voids than the intermediate region of the foamed layer lying between the skin region and the carrier. This may be accomplished by cooling the extrusion die through which the melt is extruded as well as by utilizing a cooled gating roller to confine the foaming layer as it is applied to the carrier.

An advantage of this process is that a coated textile can be produced at lower temperatures than those wherein the carrier would otherwise plastically deform, e.g. production can occur at temperatures as low as 150°C (300°F) or even 95°C (200°F).

In the examples, to produce the textile, the extruder is fed with a composition suitable for generating a foamed polymer comprising:
(1) at least one expandable thermoplastic polymer capable of being extruded;
(2) a first extrusion activated gas source dispersed within said polymer; and
(3) thermally expandable compression resistant micro-spheres, disbursed within said polymer;
said source and micro-spheres being capable on heating of expanding said polymer when released in a heated state from a pressurized extrusion die.

The resulting product is a foamed polymer coated textile having a porous carrier into and over which a foamed melt has expanded while still molten to provide an overlying plastic layer embedded in the boundary surface of the carrier, said foamed plastic layer containing voids produced by a disbursed gas generant and inclusions of thermally expanded, hollow micro-spheres having encapsulating shells that are resistant to compression.

The invention also extends to a resilient, foamed, polymeric textile comprising a permeable carrier with first and second outer surfaces having an overlying, foamed polymeric layer which has been extruded onto at least one of said outer surfaces of said carrier, said foamed layer:
(a) being in the form of a polymeric matrix containing voids to provide a foamed matrix;
(b) being at least partially embedded into said first outer surface of the carrier;
(c) containing inclusions of thermally expanded hollow micro-spheres embedded in said matrix that have encapsulating shells that are resistant to compression, and
(d) being substantially chlorine free.

The invention also extends to a resilient, foamed, polymeric textile comprising a permeable carrier 13 with first and second outer surfaces having an overlying, foamed polymeric polyvinyl chloride layer which has been extruded onto at least one of said outer surfaces of said carrier, said foamed layer:
(a) being in the form of a polymeric matrix containing voids to provide a foamed matrix;
(b) being at least partially embedded into said first outer surface of the carrier, and
(c) containing inclusions of thermally expanded hollow micro-spheres embedded in said matrix that have encapsulating shells that are resistant to compression.

The foregoing summarizes the principal features of the invention and some of its optional aspects. The invention may be further understood by the description of the preferred embodiments, in conjunction with the drawings, which now follow.

### SUMMARY OF THE FIGURES

Figure 1 is a schematic side view of an extrusion coating line.

Figure 2 is a cross-sectional side view of an extrusion screw delivering a melt of expanding polymer to the nip of a pair of rollers where the melt becomes bonded to a fabric carrier.

Figure 3 is a bottom view of the pair of rollers receiving and combining the melt with the fabric.

Figure 4 is a diagrammatic cross-sectional side view of the foamed polymeric layer bonded to a fabric carrier.

Figure 5 shows a cross-sectional textile as in Figure 4 with a second foam layer on top of the first foam layer.

Figure 6 shows a cross-section of a textile as in Figure 4 wherein foamed layers are present on both sides of the carrier.

Figure 7 is a cross-section of a textile as in Figure 4 with an additional, solid skin layer.

### DESCRIPTION OF THE PREFERRED EMBODIMENT

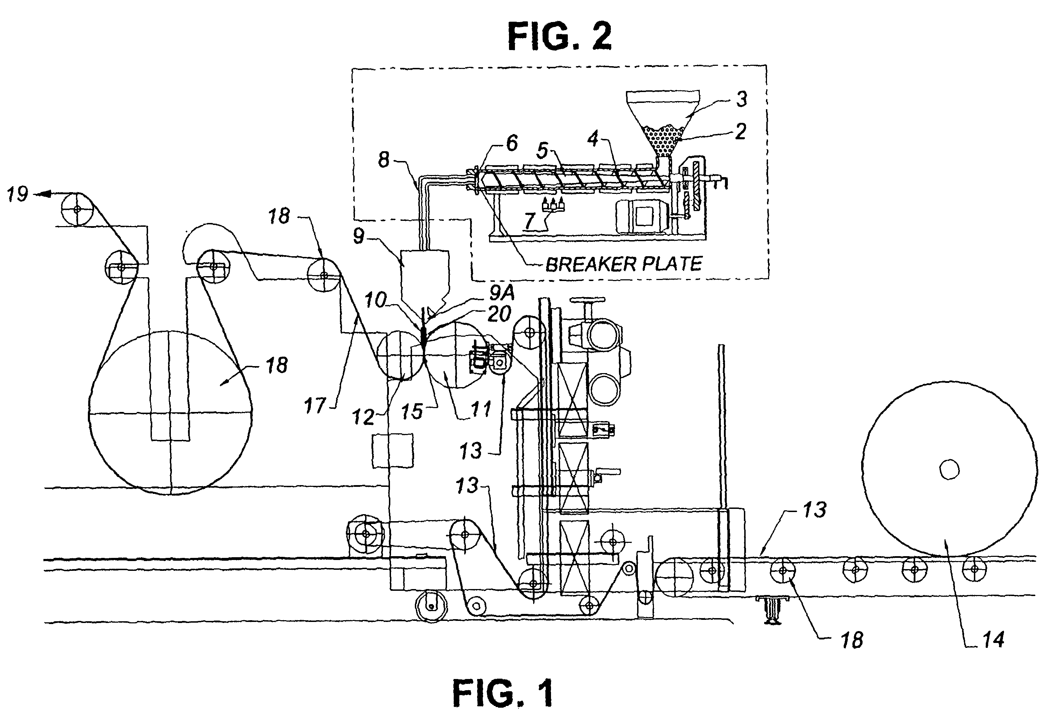

In Figures 1 and 2 a powdered plastic composition 2 in powder/pellet form is fed into the feed-hopper 3 of a spiral extruder screw 4. The gap around the spiraled flights 5 of the screw 4 may decrease in width proceeding towards the extruder outlet 6 thus creating an increasing pressure on the melt 8 contained therein. Heat is applied externally from a heat source 7 such as hot oils, gas flames, steam or electric heaters to convert the powdered composition 2 to a melt 8.

Molten plastic composition or "melt" 8 passes from the extruder outlet 6 to the extrusion die 9 and the die lips 9A where the pressure that previously arrested the release of gas by the gas source (not shown in Figure 2) is relaxed, allowing the gas source to "blow" and produce a foamed melt 10. This foamed melt 10 is fed into the nip 15 between two counter rotating rollers 11, 12.

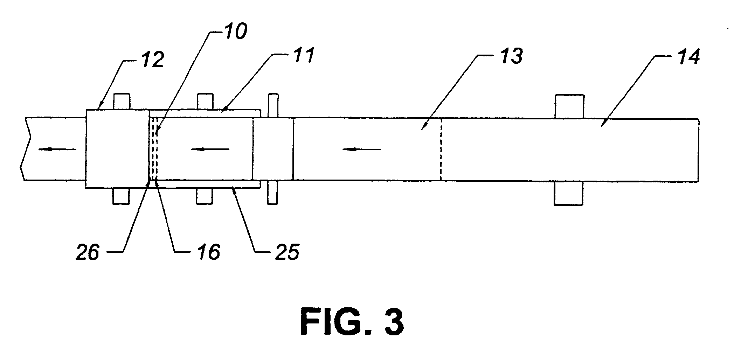

As shown in Figure 3 one of the rollers 11, preferably a powered roller 11, carries a bondable carrier material 13, of preferable a fabric or fibrous matrix, or paper or previously coated material, from a carrier-source roller 14 to the nip 15. The other follower roller 12, preferably driven in a counter rotating direction by friction off of the powered roller 11, provides with the first roller a gap 16 having a pre-determined dimension at the nip 15 which serves as a gate for metering the thickness of foamed melt 10 that is laid down on the carrier sheet 13. Desirably, the powered roller 11 has a pair of protruding circumferential end rims 25 cut into a compressible surface layer, e.g. of rubber. These rims 25 are positioned to bear against an interface 26 between the first and second rollers 11, 12 whereby a traction drive effect occurs to achieve synchronized speeds that minimize shear forces applied to the foam layer 10. By providing ring 25 of rubber in the first roller 11, the gap 16 width may be adjusted by controlling the distance between the rollers .11,12 without loss of sychronization.

Preferably, the roller 12 is temperature controlled, e.g. chilled as by circulating chilling fluid coolant, (not shown) or other suitable method of cooling in the normal manner known for extrusion processes. To facilitate heat transfer the formed textile 17 may be partially wrapped around roll 12 with the foaming melt 10 contained between the carrier 13 and the roller 12. Optionally, the powered roller 11 may be heated or cooled as circumstances require.

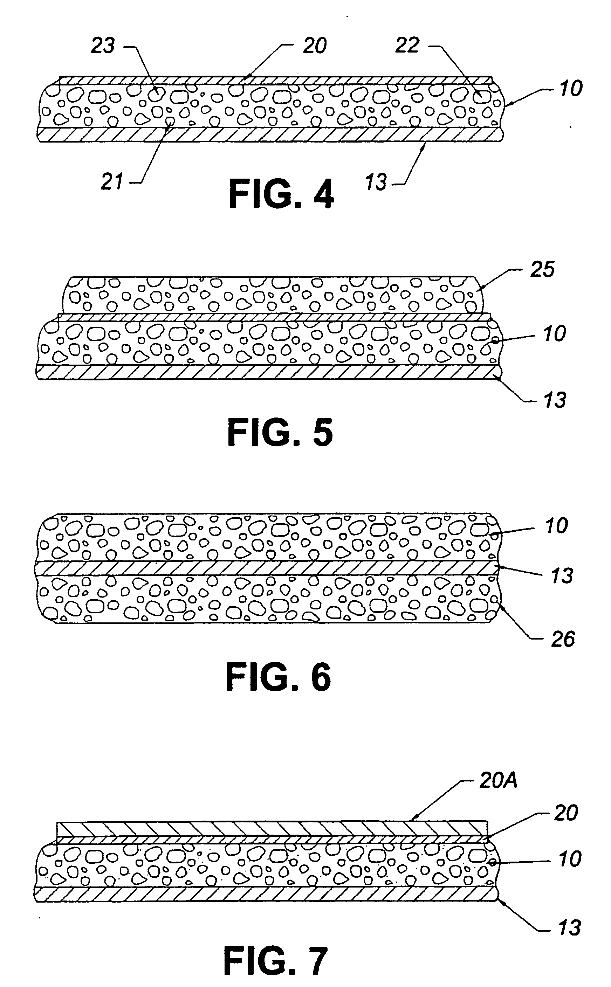

Preferably, the die 9 is also cooled, as by cooling air, oil or other means, to form a skin 20 surface on the foamed melt 10 as it leaves the die 9, cf Figure 4. This skin 20 has less voids than the core of the foamed layer, e.g. 50% or less.

In and following the gap 16 the foamed melt 10 continues its expansion, having infiltrated or mixed with the boundary surface of the carrier 13 as it proceeds to set therein. The composite textile 17 exits the two rollers 11, 12 and is carried by a series of conveying and/or cooling rollers 18 to a textile take-up roll 19. Some partial expansion of the foamed layer 10 may occur while the textile 17 is on the conveying rollers 18. As well, expansion within the carrier 13 may also continue.

In the above process, the plastic composition 2 may incorporate or comprise rubber, (both natural and synthetic such as nitrile rubbers) elastomers such as Engage-TM produced by Dow Chemicals, a polymeric vinyl compound, a polypropylene compound, a polyethylene compound, a thermoplastic polyurethane, styrenes or other known and conventional polymeric material, or combinations thereof, suitable for producing foamed plastic coated textiles or carriers. In particular, the plastic composition 2 may include dual expansion agents, comprising:
1) a dispersed blowing agent or gas source such as azodicarbonamide or other chemical blowing agents or injected compressed gas and/or volatile liquid, and;
2) a micro-encapsulated expansion agent such as EXPANCEL-TM (by Casco Nobel AB of Sweden cf U.S. patent 5,585,119) or such other encapsulated expansion agents which upon foaming provide compression-resistant micro-spheres within the plastic layer of the final textile 17.
An injected blowing agent in the form of a gas or volatile liquid may serve as an alternative or supplement to a chemical blowing agent.

A typical composition of this invention which is extrudable may contain one or more conventional additives such as fillers, pigments, colorants, plasticisers, stabilizers, anti-oxidants, lubricants and processing aids. Such additives can be used in conventional quantities for formulating an extrudable composition. As additives, this composition 2 may also include conventional binders, such as an acrylic and\or a nitrile rubber, or the like, that serve to constrain and delay the expansion of the foamed melt 10.

By way of exemplification, Table 1 shows typical formulations for a PVC composition which it is believed can be used in accordance with this invention. The preferred formulation has produced satisfactory samples. It is highly desirable that all additives and components of the composition be chloride-free. In Table 2 formulations for a preferred thermoplastic olefin composition are listed that have provided a satisfactory chlorine-free product, as well as formulations which are believed suitable for producing product. The exact formulation employed will be subject to testing by those knowledgeable in the art to achieve appropriate results.

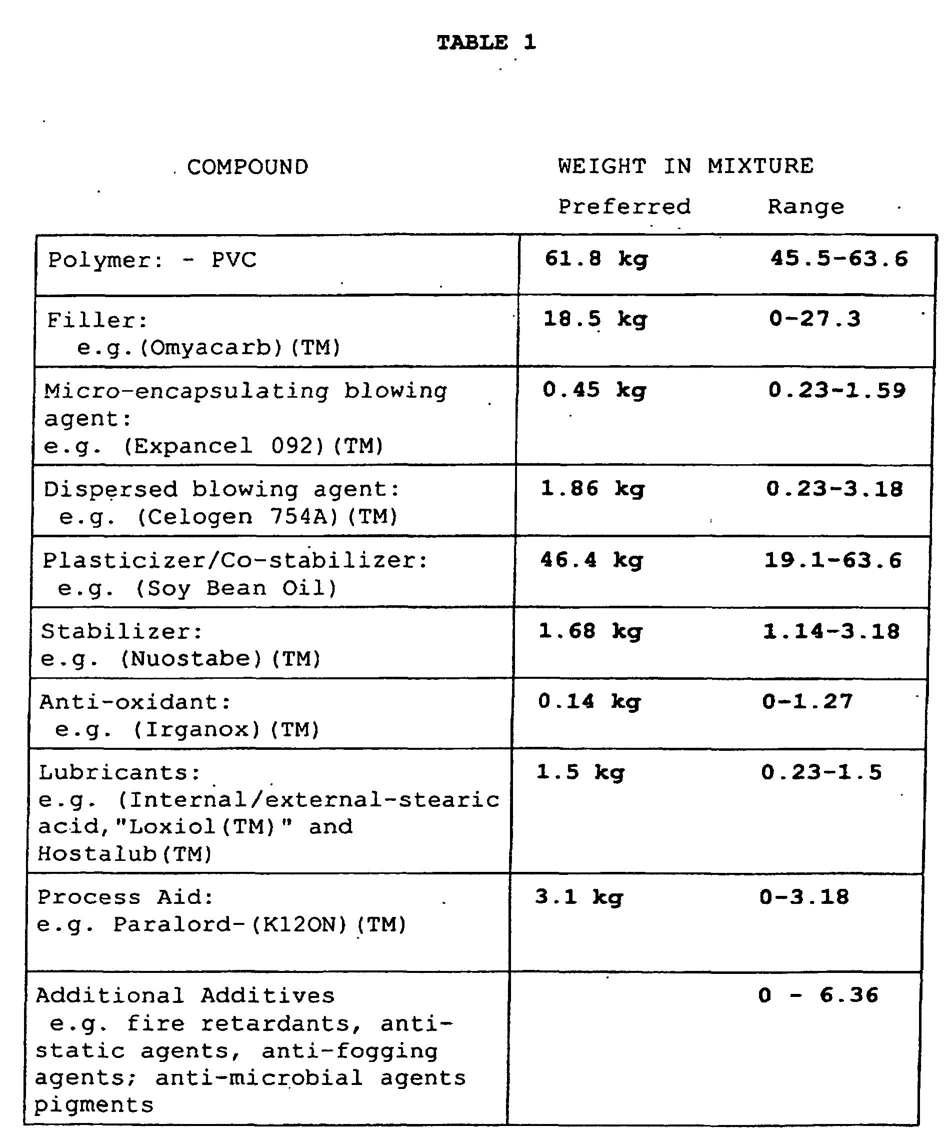

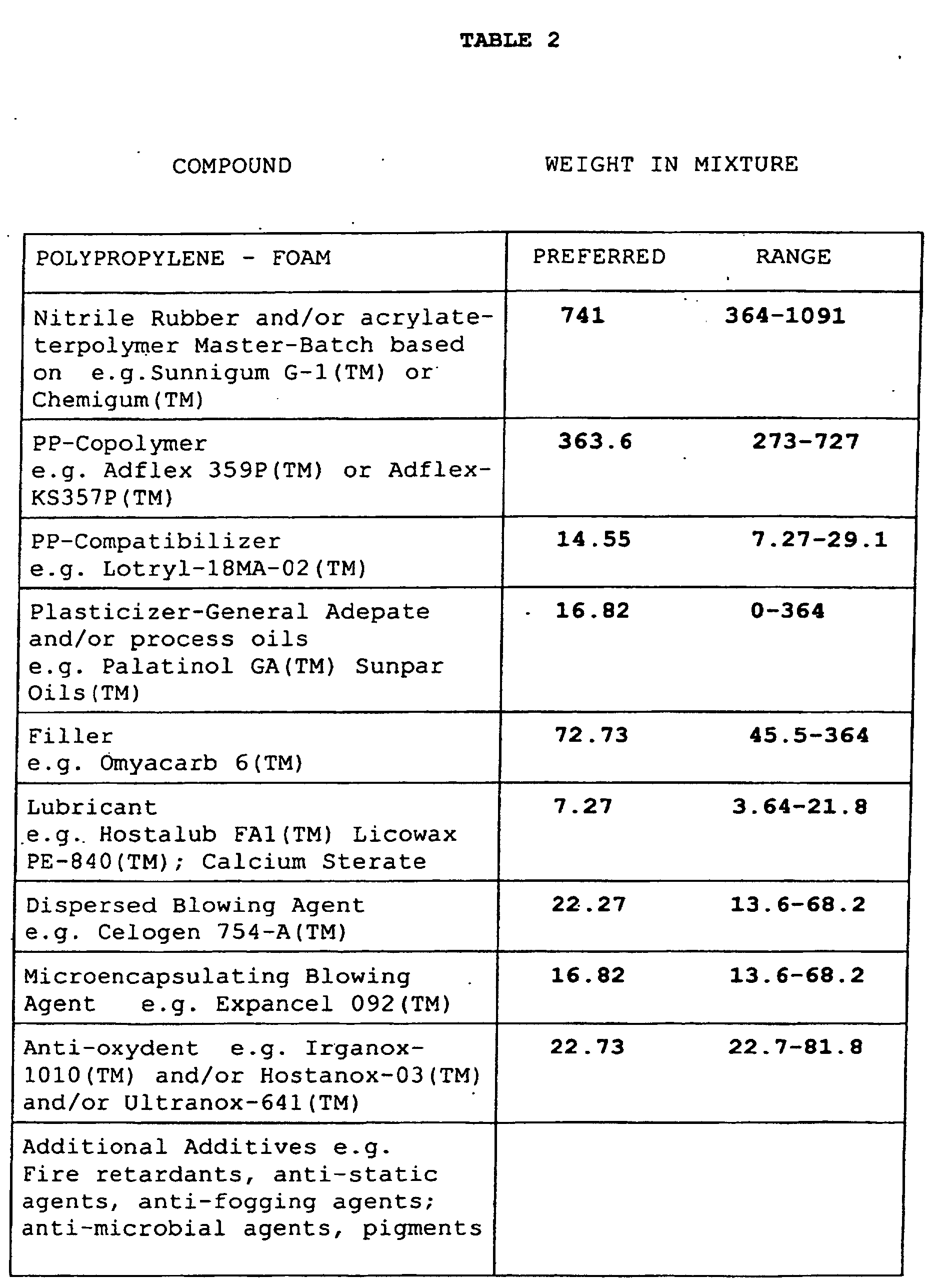

The resulting textile 17 is thereby rendered resilient and crush resistant. This textile may be further processed by pressure and/or vacuum-forming or injection molding without the foam layer being crushed or destroyed.

A sample textile 17 is depicted in Figure 4 wherein the foamed layer 10 is bonded to the carrier 13. A thin, thermally formed skin 20 has been created by the chilling effect, as by the cooled gating roller 12. Within the foamed layer 10 are two types of voids: voids 21 in the foamed matrix produced by the dispersed gas generant; and voids 22 present within expanded micro-spheres 23. Each micro-sphere 23 has an encapsulating shell of resilient, compression resistant material. The presence of two types of voids 21, 22 improves the character and "feel" of the final textile product 17.

Previously we observed that the polymer melt may be laid down on a carrier 13 that already includes a foamed layer 10. A second foam layer 25 may be laid down either over the first foamed layer 10 or as a layer 26 on the reverse side of the carrier 13, e.g. over the remaining exposed carrier layer 13, cf Figures 5 and 6. In the first case an extended depth of foamed layers with differing degrees of flexibility may be created using a pre-coated carrier 13. In the second case a sandwich construction is created which provides a superior platform for use with pour-in-place urethane foams. The added foam layer 26 can serve to protect a fragile carrier layer 13 from the damaging effects of liquid urethane.

The skin 20 in Figure 4 may be reinforced by a second layer 20A of solid(non-expanded) skin material a shown in Figure 7. This protective skin 20A can be formed by multiple passes through an extrusion coating line or by lamination. It may also be formed by co-extrusion methods wherein a single laminating station may be served by two or more extruders.

### CONCLUSION

The foregoing has constituted a description of specific embodiments showing how the invention may be applied and put into use. These embodiments are only exemplary.

These claims, and the language used therein, are to be understood in terms of the variants of the invention which have been described. They are not to be restricted to such variants, but are to be read as covering the full scope of the invention as is implicit within the invention and the disclosure that has been provided herein.

## Claims

1. A method of producing a foamed sheet textile (17) comprising:
1) extruding a polymeric melt (10) from a linear extrusion die (9) in the form of a sheet or film with two faces, the melt (10) containing two or more classes of expanding agents comprising:
(1) a first extrusion activated gas source dispersed within said melt; and
(2) thermally expandable micro-spheres (23) having encapsulating shells each containing compressed gas and being dispersed within said melt
2) allowing the expanding agents to expand, with the gas source generating gases to form a compressible foamed matrix in the melt (10) and allowing the micro-spheres (23) to expand into compression resistant, expanded micro-spheres suspended within said foamed matrix;
3) depositing the melt (10) on the surface of a permeable carrier (13) whereby the foaming melt partially penetrates said surface; and
4) allowing the foamed polymeric composition so formed to set to provide a resilient compression-resistant, foamed plastic layer that is bonded to the carrier (13) to form the resulting textile (17).

2. A method as claimed in claim 1, in combination with cooling means for said extrusion die (9) whereby a skin layer (20) of partially set melt (10) forms on the faces of the sheet or film as it exits the die (9).

3. A method as claimed in claim 1 or claim 2 in combination with first and second counter-rotating rollers (11, 12) forming a gap (16) therebetween, the first of said rollers (11) conveying the permeable carrier (13) to a contact zone proximate to said gap (16) for contact with the melt (10), wherein the expanding melt sheet or film is passed into the gap (16) to penetrate the surface of the carrier (13).

4. A method as claimed in claim 3 wherein the second of said rollers (12) is cooled by cooling means and the expanding melt (10) is contained between the second (12) of said rollers (11, 12) and the carrier (13) during at least a portion of its expansion.

5. A method as claimed in claim 3 or claim 4 wherein the melt (10), upon coming into contact with and penetrating into the surface of the permeable carrier (13) passes through the gap (16) which serves as a rotating gate defined by a fixed separation between said two rollers (11,12) to thereby limit the height of the melt (10) deposited on the carrier (13).

6. A method as claimed in claim 5 wherein the first roller (11) is powered and has protruding circumferential end rims (26) which bear upon the second roller (12) thereby actuating the second roller (12) by traction.

7. A method as claimed in claim 6 wherein the first roller (11) carries resilient end rims (26) which bear against the second roller (12) to drive the second roller (12) at a sychronized speed to minimize shear forces applied to the expanding melt sheet or film.

8. A method as claimed in claim 5 wherein the melt (10) deposited on the carrier (13) retains sufficient temperature after passing through the gate (16) to permit the melt (10) to continue to expand within the carrier (13)and to expand its height above the carrier(13) after passing through the gate (16).

9. A method as claimed in any of the preceding claims wherein the melt (10) comprises rubber or elastomers and further comprises as its principal polymeric component other than such rubber or elastomers a polymeric composition selected from the group of compounds consisting of polyvinyl chloride, polyethylene, polypropylene, styrenes, thermoplastic urethane and combinations thereof.

10. A method as claimed in claim 9, wherein the principal polymeric component of the melt (10) other than rubber or elastomers comprises principally polyvinyl chloride in combination with additives.

11. A method as claimed in claim 9, wherein the polymeric components of the melt (10) are substantially chlorine-free.

12. A method as claimed in claim 11, wherein the principal polymeric component of the melt (10) other than rubber or elastomers comprises principally polypropylene in combination with additives.

13. A method as claimed in claim 11, wherein the principal polymeric component of the melt (10) other than rubber or elastomers comprises principally polyethylene in combination with additives.

14. A method as claimed in claim 11, wherein the principal polymeric component of the melt (10) other than rubber or elastomers comprises principally styrenes in combination with additives.

15. A resilient, foamed, polymeric textile (17) comprising a permeable carrier (13) with first and second outer surfaces having an overlying, foamed polymeric layer (10) which has been extruded onto at least one of said outer surfaces of said carrier (13), said foamed layer (10):
(a) being in the form of a polymeric matrix containing voids to provide a foamed matrix;
(b) being at least partially embedded into said first outer surface of the carrier (13);
(c) containing inclusions of thermally expanded hollow micro-spheres (23) embedded in said matrix that have encapsulating shells that are resistant to compression, and
(d) being substantially chlorine free.

16. A textile (17) as claimed in claim 15, wherein the foamed polymeric layer (10) comprises as its principal polymeric component other than rubber or elastomers, a composition selected from the group of compounds consisting of polyethylene, and polypropylene, styrenes and thermoplastic urethane and combinations thereof.

17. A textile (17) as claimed in claim 16, wherein the polymeric component of the foamed polymeric layer (10) consists principally of urethane in combination with additives.

18. A textile (17), as claimed in claim 16, wherein the polymeric components of the foamed plastic layer (10) consist principally of a combination of polyethelene and polypropylene in combination with additives.

19. A textile (17) as claimed in claim 18, wherein the foamed polymeric layer (10) comprises apart from rubber or elastomers, principally polypropylene in combination with additives which are substantially chlorine-free.

20. A textile (17) as claimed in claim 18 wherein the foamed polymeric layer (10) comprises apart from rubber or elastomers principally polyethylene in combination with additives which are substantially chlorine-free.

21. A textile (17) as claimed in claim 18 wherein the foamed polymeric layer comprises apart from rubber or elastomers principally styrenes in combination with additives which are substantially chlorine-free.

22. A textile (17) as claimed in any one of claims 15 to 21, comprising an effective amount of elasticizing agent selected from the group consisting of rubber or elastomers and combinations thereof to render the textile resilient.

23. A textile (17) as claimed in any one of claims 15 to 22, wherein said foamed polymeric layer (10) has a surface opposite said carrier (13) with an integrally-formed skin region present at said surface, the skin region (20) containing less voids than the intermediate region of the foamed layer (10)lying between the skin region (20) and the carrier (13).

24. A textile (17) as claimed in claim 23, wherein the percentage of voids in the skin region (20) is less than 50% of the percentage of voids in the intermediate region.

25. A textile (17) as claimed in claim 23, wherein said foamed polymeric layer (10)has a second polymeric skin layer (20A) on its surface, opposite said carrier (13), wherein said second skin layer(20A) is substantially free of voids.

26. A textile (17) as claimed in any one of claims 15 to 23, wherein the foamed polymeric layer (10) is a first foamed layer, said textile (17) having a second foamed layer (25) present over said first foamed layer(10).

27. A textile (17) as claimed in any one of claims 15 to 25, wherein the foamed polymeric layer (10) is a first foamed layer, said textile (17) having an additional foamed layer (26) present over the second carrier surface, opposite to said first foamed layer (10).

28. A textile (17) as claimed in any one of claims 15 to 27, wherein said carrier (13) is a fibrous matrix.

29. A textile (17) as claimed in any one of claims 15 to 27, wherein said carrier (13) is a paper.

30. A textile (17) as claimed in any one of claims 15 to 28, wherein said carrier (13) does not deform at temperatures below 150°C.

31. A textile (17) as claimed in claim 30, wherein said carrier (13) does not deform at temperatures below 95°C.

32. A resilient, foamed, polymeric textile (17) comprising a permeable carrier (13) with first and second outer surfaces having an overlying, foamed polymeric polyvinyl chloride layer (10) which has been extruded onto at least one of said outer surfaces of said carrier (13), said foamed layer (10):
(a) being in the form of a polymeric matrix containing voids to provide a foamed matrix;
(b) being at least partially embedded into said first outer surface of the carrier, and
(c) containing inclusions of thermally expanded hollow micro-spheres (23)embedded in said matrix that have encapsulating shells that are resistant to compression.

33. A textile (17) as claimed in claim 32, wherein the foamed polymeric layer (10) is a first foamed layer, said textile (17) having a second foamed layer (25) present over said first foamed layer (10).

34. A textile (17) as claimed in claim 32, wherein the foamed polymeric layer (10) is a first foamed layer, and the textile (17) has an additional foamed layer (26) present over the second carrier outer surface, opposite to said first foamed layer (10).

35. A textile (17) as claimed in any one of claims 32 to 34, wherein said carrier (13) is a fibrous matrix.

36. A textile (17) as claimed in any one of claims 32 to 35 wherein said carrier (13) is a paper.

37. A textile (17) as claimed in claim 36, wherein said carrier does not deform at temperatures below 150°C.

38. A textile (17) as claimed in claim 36, wherein said carrier does not deform at temperatures below 95°C.

## Patentansprüche

1. Verfahren zur Herstellung einer geschäumten Textillage (17) umfassend:
1) Das Extrudieren einer polymeren Schmelze (10) aus einer linearen Extrusionsform (9) in der Form einer Lage oder eines Filmes mit zwei Flächen, wobei die Schmelze (10) zwei oder mehr Klassen von expandierenden Mitteln enthält mit:
(1) einer ersten extrusionsaktivierten Gasquelle dispergiert innerhalb der Schmelze und
(2) thermisch expandierbaren Mikrokugeln (23) mit einkapselnden Schalen, die jeweils komprimiertes Gas enthalten und innerhalb der Schmelze dispergiert sind,
2) Expandierenlassen der expandierenden Mittel, wobei die Gasquelle Gas erzeugt zur Bildung einer kompressibel geschäumten Matrix in der Schmelze (10) und Expandierenlassen der Mikrokugeln (23) in die kompressionswiderstandsfähigen expandierten Mikrokugeln, die innerhalb der geschäumten Matrix suspendiert sind,
3) Deponieren der Schmelze (10) auf der Oberfläche eines durchlässi gen Trägers (13), wobei die schäumende Schmelze teilweise die . Oberfläche durchdringt und
4) Aushärtenlassen der so gebildeten geschäumten polymeren Zu sammensetzung zur Bereitstellung einer nachgiebigen kompressionswiderstandsfähigen geschäumten Kunststoffschicht, die an den Träger (13) gebunden ist zur Bildung des sich ergebenden Textils (17).

2. Verfahren gemäß Anspruch 1 in Kombination mit einer Kühleinrichtung für die Extrusionsform (9), wobei sich eine Hautschicht (20) aus teilweise ausgehärteter Schmelze (10) sich auf den Flächen der Lage oder des Filmes ausbildet, während dieser aus der Form (9) austritt.

3. Verfahren gemäß Anspruch 1 oder Anspruch 2 in Kombination mit einer ersten und einer zweiten sich gegenläufig drehenden Walze (11, 12), die einen Spalt (16) hierzwischen ausbilden, wobei die erste der Walzen (11) den durchlässigen Träger (13) fördert zu einer Kontaktzone angrenzend an den Spalt (16) für einen Kontakt mit der Schmelze (10), wobei die expandierende Schmelzenlage oder der Film in den Spalt (16) hineingeführt wird, um die Oberfläche des Trägers (13) zu durchdringen.

4. Verfahren gemäß Anspruch 3, wobei die zweite der Walzen (12) durch eine Kühleinrichtung abgekühlt wird und die expandierende Schmelze (10) eingeschlossen ist zwischen der zweiten Walze (12) der Walzen (11, 12) und dem Träger (13) während mindestens eines Teils ihrer Expansion.

5. Verfahren gemäß Anspruch 3 oder Anspruch 4, wobei die Schmelze (10) nach dem Inkontakttreten mit und Durchdringen der Oberfläche des durchlässigen Trägers (13) durch den Spalt (16) hindurchläuft, welcher als ein sich drehendes Tor wirkt definiert durch eine fixierte Trennung zwischen den beiden Walzen (11, 12), um hierdurch die Höhe der Schmelze (10), die auf dem Träger (13) deponiert ist, zu begrenzen.

6. Verfahren gemäß Anspruch 5, wobei die erste Walze (11) angetrieben ist und eine vorspringende umlaufende Endrippe (26) aufweist, welche an der zweiten Walze (12) anliegt und hierdurch die zweite Walze (12) durch Traktion betätigt.

7. Verfahren gemäß Anspruch 6, wobei die erste Walze (11) elastische Endrippen (26) trägt, die an der zweiten Walze (12) anliegen zum Antrieb der zweiten Walze (12) mit einer synchronisierten Geschwindigkeit, um die Scherkräfte zu minimieren, die auf die expandierende Schmelzlage oder den Film einwirken.

8. Verfahren gemäß Anspruch 5, wobei die Schmelze (10), die auf dem Träger (13) deponiert ist, eine hinreichende Temperatur aufweist, nachdem sie das Tor (16) durchlaufen hat, um es der Schmelze (10) zu gestatten weiterhin zu expandieren innerhalb des Trägers (13) und bezüglich ihrer Höhe zu expandieren oberhalb des Trägers (13) nach dem Durchlaufen des Tores (16).

9. Verfahren gemäß einem der vorangehenden Ansprüche, wobei die Schmelze (10) Kautschuk oder Elastomere umfasst und darüber hinaus als ihre Hauptpolymerkomponente neben dem Kautschuk oder den Elastomeren eine polymere Zusammensetzung umfasst ausgewählt aus der Gruppe von Verbindungen bestehend aus Polyvinylchlorid, Polyäthylen, Polypropylen, Styrolen, thermoplastischem Urethan und Kombinationen hieraus.

10. Verfahren gemäß Anspruch 9, wobei die Hauptpolymerkomponente der Schmelze (10) neben Kautschuk oder Elastomeren hauptsächlich Polyvinylchlorid in Kombination mit Zusätzen umfasst.

11. Verfahren gemäß Anspruch 9, wobei die polymeren Komponenten der Schmelze (10) im wesentlichen chlorfrei sind.

12. Verfahren gemäß Anspruch 11, wobei die Hauptpolymerkomponente der Schmelze (10) neben Kautschuk oder Elastomeren hauptsächlich Polypropylen in Kombination mit Zusätzen umfasst.

13. Verfahren gemäß Anspruch 11, wobei die Hauptpolymerkomponente der Schmelze neben Kautschuk oder Elastomeren hauptsächlich Polyäthylen in Kom'bination mit Zusätzen umfasst.

14. Verfahren gemäß Anspruch 11, wobei die Hauptpolymerkomponente der Schmelze (10) neben Kautschuk oder Elastomeren hauptsächlich Styrone in Kombination mit Zusätzen umfasst.

15. Elastisches, geschäumtes, polymeres Textil umfassend einen durchlässigen Träger (13) mit einer ersten und einer zweiten äußeren Oberfläche, die eine überliegende geschäumte polymere Schicht (10) aufweisen, welche extrudiert wurde auf mindestens eine der äußeren Oberflächen des Trägers (13), wobei die geschäumte Schicht (10):
(a) in der Form einer polymeren Matrix vorliegt, welche Leerräume ent hält zur Bereitstellung einer geschäumten Matrix,
(b) mindestens teilweise eingebettet ist in die erste äußere Oberfläche des Trägers (13),
(c) Einschlüsse enthält von thermisch expandierten hohlen Mikrokugeln (23) eingebettet in der Matrix, welche einschließende Schalen enthält, die gegenüber einer Kompression widerstandsfähig sind, und
(d) im wesentlichen chlorfrei ist.

16. Textil (17) gemäß Anspruch 15, wobei die geschäumte polymere Schicht (10) als Hauptpolymerkomponente neben Kautschuk oder Elastomeren eine Zusammensetzung umfasst, ausgewählt aus der Gruppe von Verbindungen bestehend aus Polyäthylen, Polypropylen, Styronen und thermoplastischem Urethan und Kombinationen hieraus.

17. Textil (17) gemäß Anspruch 16, wobei die polymere Komponente der geschäumten polymeren Schicht (10) hauptsächlich aus Urethan besteht in Kombination mit Zusätzen.

18. Textil (17) gemäß Anspruch 16, wobei die polymeren Komponenten der geschäumten Kunststoffschicht (10) hauptsächlich aus einer Kombination von Polyethylen und Polypropylen besteht in Kombination mit Zusätzen.

19. Textil (17) gemäß Anspruch 18, wobei die geschäumte polymere Schicht (10) neben Kautschuk oder Elastomeren hauptsächlich Polypropylen umfasst in Kombination mit Zusätzen, die im wesentlichen chlorfrei sind.

20. Textil (17) gemäß Anspruch 18, wobei die geschäumte polymere Schicht (10) neben Kautschuk oder Elastomeren hauptsächlich Polyethylen in Kombination mit Zusätzen umfasst, die im wesentlichen chlorfrei sind.

21. Textil (17) gemäß Anspruch 18, wobei die geschäumte Polymerschicht neben Kautschuk oder Elastomeren hauptsächlich Styrole umfasst in Kombination mit Zusätzen, die im wesentlichen chlorfrei sind.

22. Textil (17) gemäß einem der Ansprüche 15 bis 21, welches eine wirksame Menge an Elastifizierungsmittel enthält ausgewählt aus der Gruppe bestehend aus Kautschuk oder Elastomeren und Kombinationen hieraus, um das Textil elastisch zu machen.

23. Textil (17) gemäß einem der Ansprüche 15 bis 22, wobei die geschäumte Polymerschicht (10) eine dem Träger (13) gegenüberliegende Oberfläche aufweist, auf welcher eine integral ausgebildete Hautregion auf der Oberfläche anwesend ist und die Hautregion (20) weniger Leerräume enthält als die Zwischenregion der geschäumten Schicht (10), welche zwischen der Hautregion (20) und dem Träger (13) liegt.

24. Textil (17) gemäß Anspruch 23, wobei der Prozentsatz an Leerräumen in der Hautregion (20) geringer als 50 % des Prozentsatzes der Leerräume in der Zwischenregion beträgt.

25. Textil (17) gemäß Anspruch 23, wobei die geschäumt Polymerschicht (10) eine zweite polymere Hautschicht (20a) auf ihrer Oberfläche aufweist, die dem Träger (13) gegenüberliegt, wobei die zweite Hautschicht (20a) im wesentlichen frei von Leerräumen ist.

26. Textil (17) gemäß einem der Ansprüche 15 bis 23, wobei die geschäumte Polymerschicht (10) eine erste geschäumte Schicht ist und das Textil (17) eine zweite geschäumte Schicht (25) besitzt, die über der ersten geschäumten Schicht (10) anwesend ist.

27. Textil (17) gemäß einem der Ansprüche 15 bis 25, wobei die geschäumte Polymerschicht (10) eine erste geschäumte Schicht ist und das Textil (17) eine zusätzliche geschäumte Schicht (26) aufweist, die über der zweiten Trägeroberfläche anwesend ist, welche der ersten geschäumten Schicht (10) gegenüberliegt.

28. Textil (17) gemäß einem der Ansprüche 15 bis 27, wobei der Träger (13) eine fibröse Matrix ist.

29. Textil (17) gemäß einem der Ansprüche 15 bis 27, wobei der Träger (13) ein Papier ist.

30. Textil (17) gemäß einem der Ansprüche 15 bis 28, wobei der Träger (13) sich nicht deformiert bei Temperaturen unterhalb 150° C.

31. Textil (17) gemäß Anspruch 30, wobei der Träger (13) sich nicht deformiert bei Temperaturen unterhalb von 95° C.

32. Elastisches geschäumtes polymeres Textil (17) umfassend einen durchlässigen Träger (13) mit einer ersten und einer zweiten äußeren Oberfläche mit einer aufliegenden geschäumten polymeren Polyvinylchloridschicht (10), die extrudiert wurde auf mindestens eine der äußeren Oberflächen des Trägers (13), wobei die geschäumte Schicht (10):
(a) in der Form einer polymeren Matrix vorliegt, die Leerräume enthält zur Bilddung einer geschäumten Matrix,
(b) mindestens teilweise eingebettet ist in die erste äußere Oberfläche des Trägers und
(c) Einschlüsse von thermisch expandierten hohlen Mikrokugeln (23) enthält, die in die Matrix eingebettet sind und einschließende Schalen enthalten, die gegenüber Kompression widerstandsfähig sind.

33. Textil (17) gemäß Anspruch 32, wobei die geschäumte Polymerschicht (10) eine erste geschäumte Schicht ist und das Textil (17) eine zweit geschäume Schicht (25) besitzt, die über der ersten geschäumten Schicht (10) anwesend ist.

34. Textil (17) gemäß Anspruch 32, wobei die geschäumte Polymerschicht (10) eine erste geformte Schicht ist und das Textil (17) eine zusätzliche geschäumte Schicht (26) besitzt, welche über der zweiten Trägeraußenfläche anwesend ist, die ersten geschäumten Schicht (10) gegenüberliegt.

35. Textil (17) gemäß einem der Ansprüche 32 bis 34, wobei der Träger 13 eine fibröse Matrix ist.

36. Textil (17) gemäß einem der Ansprüche 32 bis 35, wobei der Träger 13 ein Papier ist.

37. Textil (17) gemäß Anspruch 36, wobei der Träger sich nicht deformiert bei Temperaturen unterhalb von 150° C.

38. Textil (17) gemäß Anspruch 36, wobei der Träger sich nicht deformiert bei Temperaturen unterhalb von 95° C.

## Revendications

1. Procédé de fabrication d'un textile en feuille moussée (17), comprenant les opérations consistant à :
(1) extruder une matière fondue polymère (10) à partir d'une filière d'extrusion linéaire (9) sous la forme d'une feuille ou d'un film ayant deux faces, la matière fondue (10) contenant deux classes ou davantage d'agents d'expansion comprenant :
(1) une première source de gaz activé par extrusion dispersée à l'intérieur de ladite matière fondue ; et
(2) des microsphères (23) thermiquement expansibles, ayant des enveloppes d'encapsulation contenant chacune du gaz comprimé et étant dispersées à l'intérieur de ladite matière fondue ;
(2) laisser les agents d'expansion s'expanser, avec la source de gaz générant des gaz pour former une matrice moussée compressible dans la matière fondue (10) et permettre aux microsphères (23) de s'expanser en microsphères expansées, résistantes à la compression, en suspension à l'intérieur de ladite matrice moussée ;
(3) déposer la matière fondue (10) sur la surface d'un support perméable (13), ce par quoi la matière fondue moussante pénètre partiellement dans ladite surface ; et
(4) laisser la composition polymère moussée ainsi formée durcir pour fournir une couche de matière plastique moussée, résistante à la compression, élastique, qui est liée au support (13) afin de former le textile résultant (17).

2. Procédé selon la revendication 1, en combinaison avec un moyen de refroidissement pour ladite filière d'extrusion (9), ce par quoi une couche de peau (20) de matière fondue partiellement durcie (10) se forme sur les faces de la feuille ou du film alors qu'elle ou il quitte la filière (9).

3. Procédé selon la revendication 1 ou la revendication 2, en combinaison avec des premier et second rouleaux contrarotatifs (11, 12) formant un intervalle (16) entre eux, le premier desdits rouleaux (11) transportant le support perméable (13) jusqu'à une zone de contact proche dudit intervalle (16) en vue d'un contact avec la matière fondue (10), la feuille ou le film de matière fondue s'expansant étant amené(e) à passer dans l'intervalle (16) pour pénétrer dans la surface du support (13).

4. Procédé selon la revendication 3, dans lequel le second desdits rouleaux (12) est refroidi par un moyen de refroidissement et la matière fondue s'expansant (10) est contenue entre le second (12) desdits rouleaux (11, 12) et le support (13) pendant au moins une partie de son expansion.

5. Procédé selon la revendication 3 ou la revendication 4, dans lequel la matière fondue (10), lorsqu'elle vient en contact avec et qu'elle pénètre dans la surface du support perméable (13), passe à travers l'intervalle (16) qui sert d'entrée tournante définie par une séparation fixe entre lesdits deux rouleaux (11, 12) pour limiter de cette façon la hauteur de la matière fondue (10) déposée sur le support (13).

6. Procédé selon la revendication 5, dans lequel le premier rouleau (11) est commandé et présente des rebords d'extrémité périphériques en saillie (26) qui portent sur le second rouleau (12), permettant ainsi d'actionner le second rouleau (12) par traction.

7. Procédé selon la revendication 6, dans lequel le premier rouleau (11) porte des rebords d'extrémité élastiques (26) qui portent contre le second rouleau (12) pour entraîner le second rouleau (12) à une vitesse synchronisée pour rendre minimales les forces de cisaillement appliquées sur la feuille ou le film de matière fondue s'expansant.

8. Procédé selon la revendication 5, dans lequel la matière fondue (10) déposée sur le support (13) garde une température suffisante après passage à travers l'entrée (16) pour permettre à la matière fondue (10) de continuer à s'expanser à l'intérieur du support (13) et à accroître sa hauteur au-dessus du support (13) après être passée à travers l'entrée (16).

9. Procédé selon l'une quelconque des revendications précédentes, dans lequel la matière fondue (10) comprend du caoutchouc ou des élastomères et comprend en outre, comme composant polymère principal autre qu'un tel caoutchouc ou de tels élastomères, une composition polymère choisie dans le groupe de composés consistant en le poly(chlorure de vinyle), le polyéthylène, le polypropylène, les styrènes, l'uréthane thermoplastique et les combinaisons de ceux-ci.

10. Procédé selon la revendication 9, dans lequel le composant polymère principal de la matière fondue (10) autre que le caoutchouc ou les élastomères comprend principalement du poly(chlorure de vinyle) en combinaison avec des additifs.

11. Procédé selon la revendication 9, dans lequel les composants polymères de la matière fondue (10) sont sensiblement exempts de chlore.

12. Procédé selon la revendication 11, dans lequel le composant polymère principal de la matière fondue (10) autre que le caoutchouc ou les élastomères comprend principalement du polypropylène en combinaison avec des additifs.

13. Procédé selon la revendication 11, dans lequel le composant polymère principal de la matière fondue (10) autre que le caoutchouc ou les élastomères comprend principalement du polyéthylène en combinaison avec des additifs.

14. Procédé selon la revendication 11, dans lequel le composant polymère principal de la matière fondue (10) autre que le caoutchouc ou les élastomères comprend principalement des styrènes en combinaison avec des additifs.

15. Textile polymère, moussé, élastique (17), comprenant un support perméable (13) avec des première et seconde surfaces externes ayant une couche polymère moussée (10), de recouvrement, qui a été extrudée sur au moins l'une desdites surfaces externes dudit support (13), ladite couche moussée (10) :
(a) étant sous la forme d'une matrice polymère contenant des vides pour fournir une matrice moussée ;
(b) étant au moins partiellement noyée dans ladite première surface externe du support (13) ;
(c) contenant des inclusions de microsphères creuses (23), thermiquement expansées, noyées dans ladite matrice, qui ont des enveloppes d'encapsulation qui sont résistantes à la compression ; et
(d) étant sensiblement exempte de chlore.

16. Textile (17) selon la revendication 15, dans lequel la couche polymère moussée (10) comprend, comme composant polymère principal autre que le caoutchouc ou les élastomères, une composition choisie dans le groupe de composés consistant en le polyéthylène, et le polypropylène, les styrènes et l'uréthane thermoplastique et les combinaisons de ceux-ci.

17. Textile (17) selon la revendication 16, dans lequel le composant polymère de la couche polymère moussée (10) consiste principalement en uréthane en combinaison avec des additifs.

18. Textile (17) selon la revendication 16, dans lequel les composants polymères de la couche de matière plastique moussée (10) consistent principalement en une combinaison de polyéthylène et polypropylène en combinaison avec des additifs.

19. Textile (17) selon la revendication 18, dans lequel la couche polymère moussée (10) comprend, en dehors du caoutchouc ou des élastomères, principalement du polypropylène en combinaison avec des additifs qui sont sensiblement exempts de chlore.

20. Textile (17) selon la revendication 18, dans lequel la couche polymère moussée (10) comprend, en dehors du caoutchouc ou des élastomères, principalement du polyéthylène en combinaison avec des additifs qui sont sensiblement exempts de chlore.

21. Textile (17) selon la revendication 18, dans lequel la couche polymère moussée comprend, en dehors du caoutchouc ou des élastomères, principalement des styrènes en combinaison avec des additifs qui sont sensiblement exempts de chlore.

22. Textile (17) selon l'une quelconque des revendications 15 à 21, comprenant une quantité efficace d'agent d'élastification choisi dans le groupe constitué par le caoutchouc ou les élastomères et leurs combinaisons pour rendre le textile élastique.

23. Textile (17) selon l'une quelconque des revendications 15 à 22, dans lequel ladite couche polymère moussée (10) a une surface opposée audit support (13) avec une région de peau formée d'un seul tenant présente à ladite surface, la région de peau (20) contenant moins de vides que la région intermédiaire de la couche moussée (10) s'étendant entre la région de peau (20) et le support (13).

24. Textile (17) selon la revendication 23, dans lequel le pourcentage de vides dans la région de peau (20) est inférieur à 50% du pourcentage de vides dans la région intermédiaire.

25. Textile (17) selon la revendication 23, dans lequel ladite couche polymère moussée (10) a une seconde couche de peau polymère (20A) sur sa surface, opposée audit support (13), dans lequel ladite seconde couche de peau (20A) est sensiblement exempte de vides.

26. Textile (17) selon l'une quelconque des revendications 15 à 23, dans lequel la couche polymère moussée (10) est une première couche moussée, ledit textile (17) ayant une seconde couche moussée (25) présente sur ladite première couche moussée (10).

27. Textile (17) selon l'une quelconque des revendications 15 à 25, dans lequel la couche polymère moussée (10) est une première couche moussée, ledit textile (17) ayant une couche moussée supplémentaire (26) présente sur la seconde surface de support, opposée à ladite première couche moussée (10).

28. Textile (17) selon l'une quelconque des revendications 15 à 27, dans lequel ledit support (13) est une matrice fibreuse.

29. Textile (17) selon l'une quelconque des revendications 15 à 27, dans lequel ledit support (13) est un papier.

30. Textile (17) selon l'une quelconque des revendications 15 à 28, dans lequel ledit support (13) ne se déforme pas à des températures au-dessous de 150°C.

31. Textile (17) selon la revendication 30, dans lequel ledit support (13) ne se déforme pas à des températures au-dessous de 95°C.

32. Textile polymère, moussé, élastique (17), comprenant un support perméable (13) avec des première et seconde surfaces externes ayant une couche (10) de poly(chlorure de vinyle) polymère, moussée, de recouvrement, qui a été extrudée sur au moins l'une desdites surfaces externes dudit support (13), ladite couche moussée (10) :
(a) étant sous la forme d'une matrice polymère contenant des vides pour fournir une matrice moussée ;
(b) étant au moins partiellement noyée dans ladite première surface externe du support ; et
(c) contenant des inclusions de microsphères creuses (23), thermiquement expansées, noyées dans ladite matrice, qui ont des enveloppes d'encapsulation qui sont résistantes à la compression.

33. Textile (17) selon la revendication 32, dans lequel la couche polymère moussée (10) est une première couche moussée, ledit textile (17) ayant une seconde couche moussée (25) présente sur ladite première couche moussée (10).

34. Textile (17) selon la revendication 32, dans lequel la couche polymère moussée (10) est une première couche moussée, et le textile (17) a une couche moussée supplémentaire (26), présente sur la seconde surface externe du support, opposée à ladite première couche moussée (10).

35. Textile (17) selon l'une quelconque des revendications 32 à 34, dans lequel ledit support (13) est une matrice fibreuse.

36. Textile (17) selon l'une quelconque des revendications 32 à 35, dans lequel ledit support (13) est un papier.

37. Textile (17) selon la revendication 36, dans lequel ledit support ne se déforme pas à des températures au-dessous de 150°C.

38. Textile (17) selon la revendication 36, dans lequel ledit support ne se déforme pas à des températures au-dessous de 95°C.
